**Europäisches Patentamt**

**European Patent Office**

**Office européen des brevets**

(19)

(11) Veröffentlichungsnummer: **0 163 625**
**B1**

(12) **EUROPÄISCHE PATENTSCHRIFT**

(45) Veröffentlichungstag der Patentschrift:
**02.11.88**

(21) Anmeldenummer: **85890095.4**

(22) Anmeldetag: **18.04.85**

(51) Int. Cl.⁴: **B 60 C 15/02**

(54) **Fahrzeugrad.**

(30) Priorität: **28.05.84 AT 1758/84**

(43) Veröffentlichungstag der Anmeldung:
**04.12.85 Patentblatt 85/49**

(45) Bekanntmachung des Hinweises auf die Patenterteilung:
**02.11.88 Patentblatt 88/44**

(84) Benannte Vertragsstaaten:
**AT DE FR GB IT**

(56) Entgegenhaltungen:
**EP-A-0 103 691**
**EP-A-0 156 180**
**CH-A-271 817**
**DE-C-877 262**

(73) Patentinhaber: **Semperit Reifen Aktiengesellschaft,**
**Wienersdorferstrasse 20- 24, A-2514 Traiskirchen**
**(AT)**

(72) Erfinder: **Kresta, Erich, Rudolfgasse 7, A-2380**
**Perchtoldsdorf (AT)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

### Beschreibung

Die Erfindung betrifft ein Fahrzeugrad gemäß dem Oberbegriff des Anspruchs 1.

Ein Fahrzeugrad gemäß dieser Art wird in der EP-A-0 156 180 (veröffentlicht am 2.10.1985, Stand der Technik gemäß Art. 54 (3) EPÜ) vorgeschlagen.

Der Wulstring ist hierbei als gesondertes Bandteil ausgebildet, das erst bei der Montage des Reifens mit letzterem verbunden wird.

Bei einem herkömmlichen Fahrzeugrad ist der Reifen auf einer Felge gehalten, die mittig mit einem Tiefbett versehen ist, an welches beidseitig nach außen zu und am äußeren Umfang der Felge Sitzflächen für die Reifenwülste, die zugfeste Wulstkerne enthalten, anschließen. Der Reifen wird an der Felge dadurch gehalten, daß die Wülste auf die Sitzflächen der Felge unter dem Aufpumpdruck gepreßt sind und durch sich radial nach außen erstreckende Felgenhörner gegen ein seitliches Abrutschen von den Sitzflächen gesichert sind. Da die Wulstkerne für einen festen Sitz des Reifens auf der Felge verantwortlich sind, sind diese, um die erforderliche Stabilität zu gewährleisten, aus Bündeln von Drahtwindungen aufgebaut, die zu einem erheblichen Teil zum Gesamtgewicht des Reifens beitragen. Um einen Reifen mit derartigen Wulstkernen auf der Felge zu montieren, sind weiters geeignete Maßnahmen, beispielsweise ein Tiefbett an der Felge, erforderlich. Ein weiterer Nachteil dieses herkömmlichen Fahrzeugrades besteht darin, daß sich die Reifenwülste bei defektem, luftleerem Reifen schon nach kurzer Laufzeit von den Sitzflächen der Felge lösen und irreparable Beschädigungen am Reifen und an der Felge auftreten.

Ein Fahrzeugrad, bei dem keine Drahtwulstkerne mehr erforderlich sind, ist aus der DE-OS-3 206 171 bekannt. Anstelle der üblichen Drahtwulstkerne sind zwei Felgenringe aus Metall oder einem Stoff ähnlich hoher Festigkeit vorgeschlagen. Hiebei kann der Felgenring am Reifen anvulkanisiert sein oder auch mittels Klebung festhaftend und luftdicht befestigt sein. Die Befestigung des Felgenringes an der Felge kann ebenfalls lösbar oder festhaftend (mittels Klebung) erfolgen. Als lösbare Verbindung wird Verschrauben vorgeschlagen, wobei jedoch Dichtringe bzw. Dichtbänder zur luftdichten Montage erforderlich sind. In diesem Fall ist daher bei der Montage des Reifens ein Hantieren mit Schrauben und Dichtungsringen unumgänglich. Was ein Verbinden des Felgenringes mit der Felge durch Klebung betrifft, so ist es offensichtlich, daß auch diese Methode umständlich und zeitraubend ist und auch den Nachteil hat, daß der Reifen von der Felge kaum lösbar ist.

Aus der DE-OS-2 327 026 ist ein Fahrzeugrad bekannt, dessen Reifenwülste derart an der Felge verankert werden, daß ebenfalls kein Drahtwulstkern erforderlich ist. Zu diesem Zweck wird der Wulst zwischen dem Felgenhorn und einem der Felge fest verbundenen Hilfsring eingeführt, wobei zur Verankerung des Wulstes an seinem Sitz ein zusätzliches Preßelement zwischen Felgenhorn und Wulst eingeführt werden muß. Es sind also nicht nur entsprechende Haltemittel an der Felge auszubilden, sondern es ist bei der Montage bzw. Demontage des Reifens zusätzlich mit einem gesonderten Bauteil, dem Preßelement, zu hantieren.

Ein Fahrzeugrad, bei dem die Reifenwülste auf Sitzflächen am inneren Umfang der Felge gehalten sind, ist beispielsweise in der DE-OS-3 000 428 beschrieben. Die seitlichen Randbereiche der Felge weisen je ein sich radial nach innen erstreckendes Felgenhorn auf, an welches sich je eine Sitzfläche für die Reifenwülste anschließt. Demgemäß liegen die Reifenwülste am inneren Umfang des Felgenkörpers an und sind von den Felgenhörnern gegen ein seitliches Abrutschen von den Sitzflächen gesichert. Anschließend an die Sitzflächen sind an der Felge Vertiefungen ausgebildet, die für die Montage des Reifens auf der Felge vorgesehen sind. Zur Halterung der Reifenwülste auf den Sitzflächen ist es weiters erforderlich, in die Vertiefungen entsprechende Sicherungsringe einzusetzen oder an den inneren Endbereichen der Sitzflächen umlaufende Vorsprünge auszubilden. Ein Notlauf des Reifens ist dadurch sichergestellt, daß sich der defekte Reifen auf zwei im Abstand voneinander angeordneten Felgenabschnitten abstützen kann. Trotz der Maßnahmen zur Sicherung der Reifenwülste an der Felge (Felgenhörner, Sicherungsringe) ist es bei dieser bekannten Konstruktion bei einer hohen Beanspruchung des Reifens nicht zur Gänze auszuschließen, daß sich die Wülste von der Felge lösen.

Der Erfindung liegt daher die Aufgabe zugrund, ein Fahrzeugrad der eingangs genannten Art derart zu gestalten, daß auf das Vorsehen herkömmlicher Wulstkerne verzichtet werden kann, daß der Reifen leicht auf der Felge montiert werden kann, daß die Felge selbst einfach aufgebaut ist und in jedem Fall, ob bei Notlauf oder hoher Beanspruchung ein sicherer Halt des Reifens auf der Felge gewährleistet ist, wobei die Sitzflächen für die Wulstbereiche gleichermaßen sowohl am äußeren als auch am inneren Umfang der Felge vorgesehen werden können.

Gelöst wird die gestellte Aufgabe erfindungsgemäß durch die Kombination der Merkmale des Anspruchs 1.

Durch diese erfindungsgemäßen Maßnahmen wird ein Fahrzeugrad geschaffen, dessen Reifen keinen Wulstkern aus Stahldraht mehr benötigt, da die Wulstringe für einen sicheren Halt des Reifens auf der Felge sorgen. Die einfach aufgebaute Felge benötigt daher auch kein Tiefbett zur Montage des Reifens, auch das Ausbilden herkömmlicher Felgenhörner ist durch die Wulstringe nicht mehr erforderlich. Besonders vorteilhaft ist die erfindungsgemäße Konstruktion bei der Montage des Reifens, da die elastisch federnd aufweitbaren bzw. zusammendrückbaren Wulstringe leicht über die Felge zu ziehen sind und nahezu selbsttätig an der Felge einrasten. Die durch die Wulstringe geschaffene Verbindung Reifen/Felge hält höchsten Beanspruchungen stand und sichert in jedem Fall, also auch bei Notlauf, den Sitz des Reifens auf der Felge. Da kein Tiefbett auf der Felge mehr erforderlich ist, kann der Mittelbereich der Felge in an sich bekannter Weise als Stützfläche für den Reifen bei Notlauf ausgebildet werden.

Ein weiteres Merkmal der Erfindung besteht darin, daß die am äußeren Randbereich der Felge vorgesehene Rastnut durch Umbördeln des Randbereiches gebildet ist. Dadurch ist auf besonders einfache Weise eine sichere und zum Zweck der Demontage des Reifens leicht lösbare Verrastung der Wulstringe an der Felge gewährleistet.

Befinden sich die Sitzflächen für die Wulstbereiche am äußeren Umfang der Felge, so ist es von Vorteil, wenn erfindungsgemäß die die Rastnuten bildenden Randbereiche der Felge radial nach außen umgebogen sind, wobei sich die Sitzflächen und die Wulstringe zur Reifenmittelebene hin konisch erweitern. Bei dieser Ausführungsform sind somit ein einfacher Aufbau der Felge, eine leichte Montage des Reifens und ein sicherer Halt der Wulstbereiche auf der Felge gegeben.

Diese Vorteile liegen gleichermaßen bei einem Fahrzeugrad vor, dessen Sitzflächen am inneren Umfang der Felge vorgesehen sind. In diesem Fall sind erfindungsgemäß die die Rastnuten bildenden Randbereiche der Felge radial nach innen umgebogen, wobei sich die Sitzflächen und die Wulstringe zur Reifenmittelebene hin konisch verengen.

Der elastisch federnd aufweitbare bzw. zusammendrückbare Bereich der Wulstringe kann erfindungsgemäß auf einfache Weise dadurch gebildet werden, daß der der Rastnut der Felge zugeordnete Randbereich des Wulstringes, vorzugsweise in regelmäßigen Abständen, mit axial verlaufenden Einschnitten versehen ist.

Erfindungsgemäß ist weiters jeder Wulstbereich des Reifens axial nach außen umgeschlagen und kommt zwischen Wulstring und Sitzfläche in einer durch eine Abwinkelung des Wulstringes gebildeten Vertiefung zum Sitzen. Auf diese Weise wird einerseits eine sichere Verankerung des Wulstringes am Wulstbereich des Reifens geschaffen und andererseits ist die Abstützfläche des Wulstbereiches für die Sitzfläche der Felge gegeben.

Eine weitere vorteilhafte Ausführungsform der Erfindung besteht darin, daß jede Rastnut durch mit der Felge verbundene Rastelemente unterbrochen ist, welche in Einschnitte des Wulstringes eingreifen. Diese Ausführungsform ist dann besonders vorteilhaft, wenn auf das Fahrzeugrad als Antriebsrad derart hohe Kräfte übertragen werden, daß die Gefahr eines Wanderns der Wulstringe in den Rastnuten gegeben ist. Durch die erfindungsgemäße Maßnahme wird ein derartiges Wandern wirkungsvoll verhindert.

Eine weitere Ausführungsform, bei der eine besonders sichere Verrastung des Wulstringes an der Felge gewährleistet ist, besteht erfindungsgemäß darin, daß der der Felge zugeordnete Endbereich jedes Wulstringes zusätzlich abgewinkelt ist und in die durch eine zweifache Abwinkelung des Randbereiches der Felge gebildete Rastnut eingreift.

Besonders vorteilhaft ist es weiters, wenn als Material für die Wulstringe Federstahl verwendet wird, da Federstahl aufgrund seiner Elastizität und Festigkeit besonders geeignet ist.

Das erfindungsgemäße Fahrzeugrad zeichnet sich auch dadurch aus, daß es auf einfache Weise möglich ist, die Wulstringe an den Wulstbereichen des Reifens zu befestigen. Hiezu kann jeder Wulstbereich des Reifens im nicht vulkanisierten Zustand um den abgewinkelten Endbereich des Wulstringes gelegt und anschließend der Reifen gemeinsam mit dem Wulstring vulkanisiert werden. Dabei wird eine unlösbare Verbindung Wulstringe/Reifen geschaffen. Erfindungsgemäß ist es jedoch auch möglich, die Wulstringe am fertig geformten und vulkanisierten Reifen anzubringen.

Weitere Merkmale, Vorteile und Einzelheiten der Erfindung werden nun anhand der Zeichnung, die mehrere Ausführungsbeispiele des erfindungsgemäßen Fahrzeugrades darstellt, näher beschrieben.

Hiebei zeigen: die Fig. 1 ein erstes Ausführungsbeispiel eines Fahrzeugrades mit einem Reifen und einer Felge radial im Teilschnitt; Fig. 1a einen Teil eines Wulstringes, der als Verankerungselement des Reifens an der Felge vorgesehen ist in Draufsicht; die Fig. 2 bis 4 weitere Ausführungsbeispiele eines Fahrzeugrades radial im Teilschnitt und die Fig. 5 eine abgewandelte Felge.

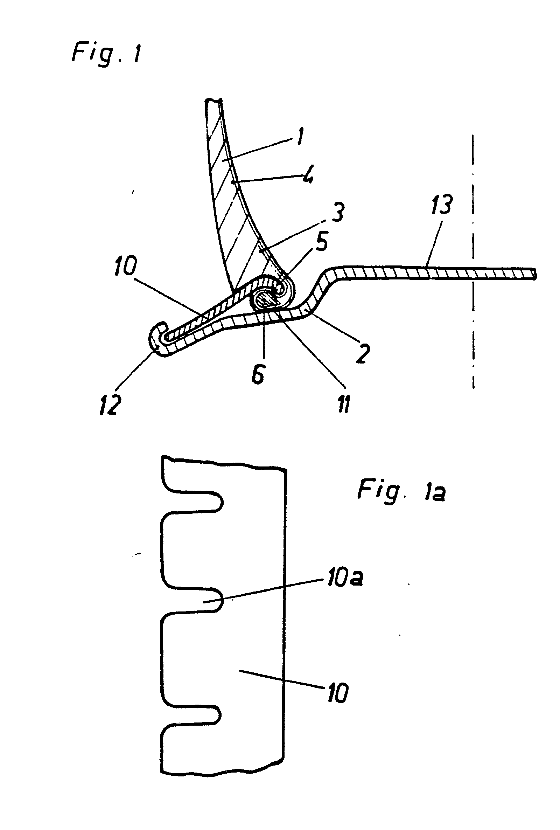

Gemäß Fig. 1 besteht das Fahrzeugrad im wesentlichen aus einem Reifen 1, einer starren einteiligen Felge 2 und zwei dem Reifen 1 zugeordneten Wulstringen 10. Der Reifen 1 ist in bekannter Weise mit einem nicht dargestellten Gürtel und einer ein- oder mehrlagigen Radialkarkasse 4 versehen. Die freien Endbereiche der Radialkarkasse 4 sind in Wulstbereichen 5 um noch zu beschreibende Wulstfüller 6 umgeschlagen. Der Hochschlag 3 der Karkasse 4 endet im Seitenwandbereich des Reifens 1.

Der dem Wulstbereich 5 zugeordnete und am Wulstbereich 5 verankerte Endbereich jedes Wulstringes 10 ist in Richtung zur Reifenachse hinweisend abgewinkelt, wobei in der durch diese Abwinkelung gebildeten Vertiefung der Wulstbereich 5 sitzt, der somit durch die radial nach außen umgebogene, um den Wulstfüller 6 geschlungene Karkasse 4 gebildet ist. Hiebei ist als Wulstfüller 6 ein Kernelement aus elastomerem Material, vorzugsweise Gummi, mit beliebigem Querschnitt vorgesehen. Der Umschlagbereich der Karkasse 4 kann zusätzlich noch mit Polsterelementen (Polstergummi) aufgefüllt sein.

Die diesem Reifenfuß angepaßte Felge 2 weist Sitzflächen 11 für die Wulstbereich 5 auf, wobei jede Sitzfläche 11 unter einem Winkel von etwa 2 bis 10° gegenüber der Axialrichtung geneigt verläuft und als sich in Richtung Reifenmittelebene konisch erweiternde Fläche ausgebildet ist, wodurch die Montage des Reifens 1 an der Felge 2 erleichtert ist. Die äußeren Endbereiche der Felge 2 weisen anstelle von Felgenhörnern radial nach außen umgebördelte Randbereiche auf, wodurch eine über den Felgenumfang verlaufende Rastnut 12 für den Wulstring 10 gebildet wird.

Der der Rastnut 12 zugeordnete Bereich des Wulstringes 10 ist, wie aus Fig. 1a ersichtlich ist, in regelmäßigen Abständen mit Einschnitten 10a versehen, die vorzugsweise alle 2 bis 5 cm und etwa bis zur Mitte des Wulstringes 10 verlaufend, vorgesehen sind. Da die Wulstringe 10 aus einem zwar festen aber federnden Material, beispielsweise nicht rostendem Federstahl, gefertigt sind, ermöglichen die Einschnitte 10a die Reifenmontage. Es kommt zu einem Aufweiten der Einschnitte 10a, wenn der Wulstring 10 über den umgebördelten Randbereich der Felge 2 gezogen wird.

Durch die erfindungsgemäße Verankerung des Reifens 1 mit der Felge 2 über zwei Wulstringe 10 ist auch bei defektem Reifen, also bei Notlauf, gewährleistet, daß sich der Reifen 1 von der Felge 2 nicht lösen kann. Die Wulstringe 10 halten in jedem Fall die Wulstbereiche 5 an den Sitzflächen 11 der Felge 2. Da die Felge 2 kein Tiefbett benötigt, kann ihr äußerer Umfang als Stützfläche 13 für den Reifen 1 bei Notlauf ausgebildet werden.

Die Wulstringe 10 können bei unvulkanisiertem Reifen 1 am Reifen 1 positioniert werden und mit dem Reifen 1 vulkanisiert werden, wodurch eine feste unlösbare Verbindung Reifen 1/Wulstringe 10 gegeben ist. Es ist jedoch auch möglich, die Wulstringe 10 erst am fertig geformten und vulkanisierten Reifen 1 anzubringen.

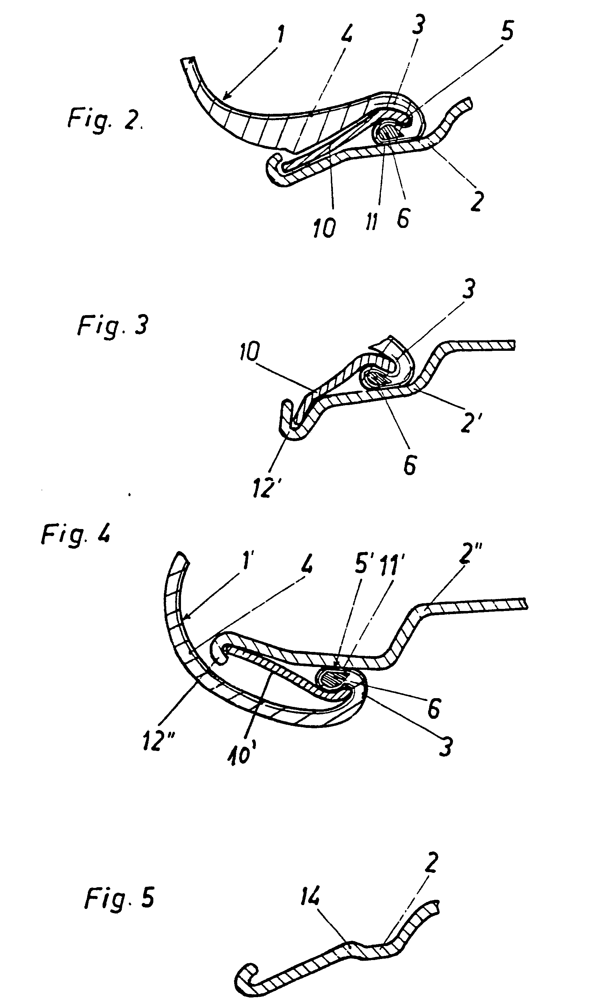

Das in Fig. 2 dargestellte Ausführungsbeispiel unterscheidet sich zu dem in Fig. 1 dargestellten darin, daß die Reifenseitenwand wesentlich bauchiger gestaltet ist, sodaß der untere Endbereich der Seitenwand nahezu parallel zum Wulstring 10 verläuft und diesen im wesentlichen abdeckt. Die einzelnen Bauteile sind in Übereinstimmung mit dem Ausführungsbeispiel gemäß Fig. 1 beziffert.

Ein weiteres Ausführungsbeispiel des erfindungsgemäßen Fahrzeugrades ist in Fig. 3 dargestellt. Hiebei unterscheidet sich auch dieses Ausführungsbeispiel nur geringfügig von den vorhergehenden Ausführungsbeispielen. Die Rastnut 12' ist durch einen zweifach abgewinkelten Endbereich der Felge 2' gebildet. Ebenso sind auch die zwischen den Einschnitten 10a liegenden Bereiche des Wulstringes 10 zumindest teilweise zusätzlich abgewinkelt.

In Fig. 4 ist ein Ausführungsbeispiel dargestellt, bei dem die an der Felge 2' vogesehenen Sitzf lächen 11' für die Wulstbereiche 5' am inneren Umfang der Felge 2'' ausgebildet sind. Um die Montage des Reifens 1' auf der Felge 2'' zu erleichtern, ist wiederum eine entsprechende Neigung der Sitzflächen 11' gegeben, die nun gegensinnig zu jener der Sitzflächen der vorhergehenden Ausführungsbeispiele verläuft. Der Wulstring 10' ist dieser Neigung entsprechend angepaßt und ansonsten wie im Ausführungsbeispiel gemäß den Fig. 1 und 1a ausgebildet, und ist einerends in der durch den umgebördelten Randbereich der Felge 2'' gebildeten Rastnut 12'' gehalten, wobei die Felge 2'' zur Bildung der Rastnut 12'' nun radial nach innen umgebogen ist. Der Wulstbereich 5', in dem der zweite Endbereich des Wulstringes 10' verankert ist, ist gegenüber der Seitenwand um etwa 180° umgebogen.

Wie aus Fig. 5 ersichtlich ist, kann die Felge 2 in an sich bekannter Weise mit einem sogenannten Hump 14 versehen sein, wobei der Felgenhump 14 über den gesamten Umfang der Felge 2 vorgesehen sein kann oder nur örtlich ausgebilet ist.

Bei allen beschriebenen Ausführungsbeispielen des erfindungsgemäßen Fahrzeugrades kann die Rastnut 12, 12', 12'' durch nicht dargestellte Rastelemente, die vorzugsweise aus dem Material der Felge 2, 2', 2'' gebildet sind und beispielsweise mit der Felge 2, 2', 2'' verschweißt sind, unterbrochen sein. Der Abstand dieser Rastelemente voneinander entspricht hiebei dem Abstand der Einschnitte 10a am Wulstring 10, wobei die Rastelemente bei montiertem Reifen in die Einschnitte 10a des Wulstringes 10 eingreifen. Diese Ausbidlung ist dann besonders vorteilhaft, wenn das erfindungsgemäße Fahrzeugrad als Antriebsrad eines stark motorisierten Fahrzeuges, beispielsweise eines Schwerlastfahrzeuges Verwendung findet, wo verhältnismäßig große Kräfte von der Felge auf den Reifen übertragen werden. Diese Ausbildung verhindert wirkungsvoll ein Wandern des Reifens auf der Felge.

Bei allen beschriebenen Ausführungsbeispielen ist es weiters möglich, die Wulstringe mitzuvulkanisieren oder erst am fertigen und vulkanisierten Reifen anzubringen. Die Demontage des Reifens von der Felge ist mittels eines geeigneten Werkzeuges, das nicht Gegenstand der vorliegenden Erfindung ist, möglich.

Die Erfindung ist nicht auf die dargestellten Ausführungsbeispiele begeschränkt. So können insbesondere die einzelnen Ausführungsvarianten untereinander kombiniert werden. Weiters kann die Felge auch zweiteilig ausgeführt sein. Als Reifen kann sowohl ein Reifen aus Gummi oder aus Kunststoff oder aus einem faserverstärktem Material Verwendung finden. Der Reifen kann sowohl ein Radialreifen mit Gürtel als auch ein Diagonalreifen sein. Für den Wulstring wird, wie schon weiter oben erwähnt, insbesondere Metall Verwendung finden. Es ist jedoch auch möglich, einen Kunststoff mit entsprechender Festigkeit und Elastizität einzusetzen.

**Patentansprüche**

1. Fahrzeugrad bestehend aus einer Felge (2, 2', 2'') einém Reifen (1, 1') aus Gummi oder gummiähnlichen Kunststoffen, wobei der Reifen eine ein- oder mehrlagige Karkasse (4) aufweist, deren freie Endbereiche (3) in Wulstbereichen durch Umschlingen von Wulstkernen (6) verankert sind, welche Wulstbereiche auf Sitzflächen (11, 11') der Felge sitzen, wobei der Reifen (1, 1') an der Felge (2, 2', 2'') in axialer Richtung durch zwei Wulstringe (10, 10') gehalten ist, welche einerseits im Wulstbereich (5, 5') des Reifens verankert sind und andererseits an der Felge (2, 2', 2'') lösbar verrastet sind, wobei der Wulstring (10, 10') elastisch federnd aufweitbar bzw. zusammendrückbar ist, und wobei der Wulstkern zwischen dem Wulstring (10, 10') und der Sitzfläche (11, 11') der Felge angeordnet ist, dadurch gekennzeichnet, daß der Wulstring (10, 10') als bandförmiger Ring ausgebildet ist, der sich vom Wulstbereich (5, 5') axial nach außen erstreckt, mit seinem axial inneren Randbereich im Wulstbereich (5, 5') auch im nichtmontierten Zustand des Reifens verankert ist und mit seinem axial äußeren Randbereich in einer am axial äußeren Randbereich der Felge (2, 2', 2'') ausgebildeten Rastnut (12, 12', 12'') unmittelbar einrastbar ist, obei der axial äußere Randbereich des Wulstringes (10, 10') über den Felgenrand ziehbar ist, und wobei der Wulstkern als Wulstfüller (6) aus elastomerem Material ausgebildet ist.

2. Fahrzeugrad nach Anspruch 1, dadurch gekennzeichnet, daß die am äußeren Randbereich der Felge (2, 2', 2'') vorgesehene Rastnut (12, 12', 12'') durch Umbördeln des Randbereiches gebildet ist.

3. Fahrzeugrad nach Anspruch 1 oder 2, bei dem die Sitzflächen für die Wulstbereiche am äußeren Umfang der Felge vorgesehen sind, dadurch gekennzeichnet, daß die die Rastnuten (12, 12') bildenden Randbereiche der Felge (2, 2') radial nach außen umgebogen sind, wobei sich die Sitzflächen (11) und die Wulstringe (10) zur Reifenmittelebene hin konisch erweitern.

4. Fahrzeugrad nach Anspruch 1 oder 2, bei dem die Sitzflächen für die Wulstbereiche am inneren Umfang der Felge vorgesehen sind, dadurch gekennzeichnet, daß die die Rastnuten (12'') bildenden Randbereiche der Felge (2'') radial nach innen umgebogen sind, wobei sich die Sitzflächen (11') und die Wulstringe (10') zur Reifenmittelebene hin konisch verengen.

5. Fahrzeugrad nach einem der Ansprüche 1 bis 4, dadurch gekennzeicnet, daß jeder Wulstbereich (5, 5') des Reifens (1, 1') axial nach außen umgeschlagen ist, und zwischen Wulstring (10, 10') und Sitzfläche (11, 11') in einer durch eine Abwinkelung des Wulstringes (10, 10') gebildeten Vertiefung zum Sitzen kommt.

6. Fahrzeugrad nach einem der Ansprüche 1 bis 5, dadurch gekennzeichnet, daß der der Rastnut (12, 12', 12'') der Felge (2, 2', 2'') zugeordnete Randbereich des Wulstringes (10, 10'), vorzugsweise in regelmäßigen Abständen, mit axial verlaufenden Einschnitten (10a) versehen ist.

7. Fahrzeugrad nach einem der Ansprüche 1 bis 6, dadurch gekennzeichnet, daß jede Rastnut (12, 12', 12'') durch mit der Felge (2, 2', 2'') verbundene Rastelemente unterbrochen ist, welche in Einschnitte (10a) des Wulstringes (10, 10') eingreifen.

8. Fahrzeugrad nach einem der Ansprüche 1 bis 7, dadurch gekennzeichnet, daß der der Felge (2') zugeordnete Randbereich des Wulstringes (10) zusätzlich abgewinkelt ist und in die durch eine zweifache Abwinkelung des Randbereiches der Felge (2') gebildete Rastnut (12') eingreift.

9. Fahrzeugrad nach einem der Ansprüche 1 bis 8, dadurch gekennzeichnet, daß der Wulstring (10, 10') aus Federstahl gefertigt ist.

10. Fahrzeugrad nach einem der Ansprüche 1 bis 9, dadurch gekennzeichnet, daß die Wulstringe (10, 10') mit dem Reifen (1, 1') mitvulkanisiert sind.

11. Fahrzeugrad nach einem der Ansprüche 1 bis 9, dadurch gekennzeichnet, daß die Wulstringe (10, 10') am fertig geformten und vulkanisierten Reifen (1, 1') eingesetzt sind.

**Claims**

1. A vehicle wheel comprising a rim (2, 2', 2'') and a tire (1, 1') made of rubber or plastic material similar to rubber, whereby the tire has a single or multilayer carcass (4), the free end areas (3) of which are anchored in bead areas by bead cores (6) being wound round, said bead areas being seated on seats (11, 11') of the rim, whereby the tire (1, 1') is held in an axial direction on the rim (2, 2', 2'') by two detachably locked clincher rings (10, 10') which are anchored in the bead areas (5, 5') of the tire and press said bead areas (5, 5') on to the rim (2, 2', 2''), whereby the clincher ring (10, 10') can be expanded and/or pressed together in an elastically resilient manner, and whereby the bead core is disposed between the clincher ring (10, 10') and the seat (11, 11') of the rim, characterised in that the clincher ring (10, 10') is designed as a band-shaped ring which extends axially outwards from the bead area (5, 5'), is anchored with its axially inner edge area in the bead area (5, 5') even when the tire is in the unmounted state and can lock in directly in a stop groove (12, 12', 12'') constructed on the axially outer edge area of the rim (2, 2', 2''), whereby the axially outer edge area of the clincher ring (10, 10') can be pulled over the edge of the rim, and whereby the bead core is designed as a bead filler (6) made of elastomer material.

2. A vehicle wheel as claimed in Claim 1, characterised in that the stop groove (12, 12', 12'') provided on the outer edge area of the rim (2, 2', 2'') is formed by beading the edge area.

3. A vehicle wheel as claimed in Claim 1 or 2, on which the seats for the bead areas are provided on the outer periphery of the rim, characterised in that the edge areas of the rim (2, 2') forming the stop grooves (12, 12') are bent radially outwards, whereby the seats (11) and the clincher rings (10) widen conically towards the centre plane of the tire.

4. A vehicle wheel as claimed in Claim 1 or 2, on which the seats for the bead areas are provided on the inner periphery of the rim, characterised in that the edge areas of the rim (2'') forming the stop grooves (12'') are bent over radially inwards, whereby the seats (11') and the clincher rings (10') narrow conically towards the centre plane of the tire.

5. A vehicle wheel as claimed in one of the Claims 1 to 4, characterised in that each bead area (5, 5') of the tire (1, 1') is turned over axially outwards, and comes to rest between the clincher ring (10, 10') and seat (11, 11') in a recess formed by a bending of the clincher ring (10, 10').

6. A vehicle wheel as claimed in one of the Claims 1 to 5, characterised in that the edge area of the clincher ring (10, 10') associated with the stop groove (12, 12', 12'') of the rim (2, 2', 2'') is provided with axially running indents (10a), preferably at regular intervals.

7. A vehicle wheel as claimed in one of the Claims 1 to 6, characterised in that each stop groove (12, 12', 12'') is interrupted by stop elements connected to the rim (2, 2', 2'') which engage in indents (10a) of the clincher ring (10, 10').

8. A vehicle wheel as claimed in one of the Claims 1 to 7, characterised in that the edge area of the clincher ring (10) associated with the rim (2') is additionally bent and engages in the stop groove (12') formed by the edge area of the rim (2') being bent twice

9. A vehicle wheel as claimed in one of the claims 1 to 8, characterised in that the clincher ring (10, 10') is made out of spring steel.

10. A vehicle wheel as claimed in one of the Claims 1 to 9, characterised in that the clincher rings (10, 10') are vulcanised together with the tire (1, 1').

11. A vehicle wheel as claimed in one of the Claims 1 to 9, characterised in that the clincher rings (10, 10') are used on the finish formed and vulcanised tire (1, 1').

**Revendications**

1. Roue de véhicule comprenant une jante (2, 2', 2'') et un pneumatique (1, 1') en du caoutchouc ou en des matériaux similaires à du caoutchouc, ce pneumatique présentant une carcasse (4) à une ou plusieurs couches dont les régions extrêmes libres (3) sont ancrées dans des régions du bourrelet par rabat autour de noyaux (6) de ce bourrelet, lesquelles régions du bourrelet reposent sur des surfaces de siège (11, 11') de la jante, le pneumatique (1, 1') étant retenu sur la jante (2, 2', 2''), dans le sens axial , par l'intermédiaire de deux anneaux d'arrêt (10, 10') qui sont encrantés amoviblement, sont ancrés dans les régions (5, 5') du bourrelet du pneumatique et pressent ces dernières contre la jante (2, 2', 2''), l'anneau d'arrêt (10, 10') pouvant être respectivement dilaté ou comprimé par effet d'élasticité, et le noyau du bourrelet étant intercalé entre cet anneau d'arrêt (10, 10') et la surface de siège (11, 11') de la jante, caractérisée par le fait que l'anneau d'arrêt (10, 10') est réalisé en tant qu'anneau en forme de bande qui s'étend axialement vers l'extérieur à partir de la région (5, 5') du bourrelet, est ancré par sa zone marginale axialement interne dans cette région (5, 5') du bourrelet, même en condition non montée du pneumatique, et peut être directement encranté, par sa zone marginale axialement externe, dans une rainure d'encrantage (12, 12', 12'') ménagée dans la région marginale axialement externe de la jante (2, 2', 2''), la zone marginale axialement externe de l'anneau d'arrêt (10, 10') pouvant être bandée sur le bord de la jante, et le noyau du bourrelet étant réalisé sous la forme d'une garniture (6) de bourrelet en un élastomère.

2. Roue de véhicule selon la revendication 1, caractérisée par le fait que la rainure d'encrantage (12, 12', 12'') prévue dans la région marginale externe de la jante (2, 2', 2'') est formée par rabat de cette région marginale.

3. Roue de véhicule selon la revendication 1 ou 2, dans laquelle les surfaces de siège associées aux régions du bourrelet sont prévues sur le pourtour extérieur de la jante, caractérisée par le fait que les régions marginales de cette jante (2, 2') qui forment les rainures d'encrantage (12, 12') sont cintrées radialement vers l'extérieur, les surfaces de siège (11) et les anneaux d'arrêt (10) s'évasant coniquement en direction du plan médian du pneumatique.

4. Roue de véhicule selon la revendication 1 ou 2, dans laquelle les surfaces de siège associées aux régions du bourrelet sont prévues sur le pourtour intérieur de la jante, caractérisée par le fait que les régions marginales de cette jante (2'') qui forment les rainures d'encrantage (12'') sont cintrées radialement vers l'intérieur, les surfaces de siège (11') et les anneaux d'arrêt (10') se rétrécissant coniquement en direction du plan médian du pneumatique.

5. Roue de véhicule selon l'une des revendications 1 à 4, caractérisée par le fait que chaque région (5, 5') du bourrelet du pneumatique (1, 1') est rabattue axialement vers l'extérieur et vient se loger, entre l'anneau d'arrêt (10, 10') et la surface de siège (11, 11'), dans un renfoncement formé par un coude de l'anneau d'arrêt (10, 10').

6. Roue de véhicule selon l'une des revendications 1 à 5, caractérisée par le fait que la zone marginale de l'anneau d'arrêt (10, 10') qui est associée à la rainure d'encrantage (12, 12', 12'') de la jante (2, 2', 2'') est pourvue, de préférence à intervalles réguliers, d'encoches (10a) s'étendant axialement.

7. Roue de véhicule selon l'une des revendications 1 à 6, caractérisée par le fait que chaque rainure d'encrantage (12, 12', 12'') est interrompue par des éléments d'encrantage qui sont reliés à la jante (2, 2', 2''), et pénètrent dans des encoches (10a) de l'anneau d'arrêt (10, 10').

8. Roue de véhicule selon l'une des revendications 1 à 7, caractérisée par le fait que la zone marginale de l'anneau d'arrêt (10) qui est associée à la jante (2') est coudée additionnellement, et pénètre dans la rainure d'encrantage (12') formée par un double coude de la région marginale de la jante (2').

9. Roue de véhicule selon l'une des revendications 1 à 8, caractérisée par le fait que l'anneau d'arrêt (10, 10') est fabriqué en acier à ressorts.

10. Roue de véhicule selon l'une des revendications 1 à 9, caractérisée par le fait que les anneaux d'arrêt (10, 10' ) sont vulcanisés conjointement au pneumatique (1, 1').

11. Roue de véhicule selon l'une des revendications 1 à 9, caractérisée par le fait que les anneaux d'arrêt (10, 10') sont mis en place sur le pneumatique (1, 1') dont le moulage et la vulcanisation sont achevés.

Fig. 1

1

4

3

5

10

12

6

11

2

13

Fig. 1a

10a

10

0 163 625

Fig. 2.

Fig. 3

Fig. 4

Fig. 5

3